# EUROPÄISCHE PATENTSCHRIFT

(11) **EP 0 324 054 B1**
(45) Veröffentlichungstag und Bekanntmachung des Hinweises auf die Patenterteilung: **15.09.1993**
(21) Anmeldenummer: 88111797.2
(22) Anmeldetag: 22.07.1988
(51) Int. Cl.: G02B 6/44, H01B 7/34

(54) **Verfahren zur Herstellung eines optischen Kabels**
Manufacturing process of an optical cable
Procédé de fabrication d'un câble optique

(30) Priorität: 25.11.1987 DE 3739879 U
(43) Veröffentlichungstag der Anmeldung: 19.07.1989
(73) Patentinhaber: kabelmetal electro GmbH, 30002 Hannover (DE)
(72) Erfinder: Breitenbach, Otto, Dipl.-Ing., D-8500 Nürnberg (DE); Hetz, Helmar, D-8458 Sulzbach-Rosenberg (DE); Rous, Friedemann, Ing. (grad.), D-8500 Nürnberg 10 (DE); Uttenreuther, Josef, D-8500 Nürnberg (DE)

(56) Entgegenhaltungen:
- EP-A- 0 107 796
- EP-A- 0 175 419
- DE-A- 3 444 500
- DE-A- 3 504 041
- FR-A- 2 565 024
- US-A- 4 125 644
- US-A- 4 482 204
- US-A- 4 547 626
- US-A- 4 575 184

## Beschreibung

Die Erfindung bezieht sich auf ein Verfahren zur Herstellung einer Übertragungsleitung für optische Signale, mit einer Seele in der mindestens ein Lichtwellenleiter angeordnet ist, wobei um die Seele eine Hülle aus einem halogenfreien und schwer entflammbaren Werkstoff herumgeformt wird, wobei über der Hülle ein aus einem halogenfreien, schwer entflammbaren und durch energiereiche Strahlen vernetzbaren Material bestehender Mantel aufgebracht wird und wobei der Mantel abschließend in einer energiereiche Strahlen abgebenden Strahlenquelle vernetzt wird (DE-OS 34 44 500).

Lichtwellenleiter - im folgenden kurz als "LWL" bezeichnet - sind fertige Gebilde aus Glasfasern, die ohne zusätzliche Bearbeitung zur Übertragung von optischen Signalen geeignet sind. Gegenüber metallischen Leitern haben sie einige Vorteile. Die LWL sind sehr breitbandig und dämpfungsarm. Sie sind gut biegbar und haben kleine Durchmesser. Von besonderem Vorteil ist, daß keine Beeinflussungen der über LWL übertragenen Signale durch äußere elektrische und magnetische Störfelder auftreten. Leitungen mit LWL können daher ohne besondere Abschirmungen auch in der Nähe von Starkstromleitungen und in Geräten der Starkstromtechnik eingesetzt werden. Sie benötigen dabei nur einen ausreichenden mechanischen Schutz, da die LWL mechanisch empfindliche, relativ spröde Gebilde sind. Sie dürfen nicht um zu kleine Radien gebogen werden und müssen vor Zug- und Druckbelastungen geschützt werden.

Die mit dem Verfahren nach der DE-OS 33 42 274 hergestellte Übertragungsleitung weist zum Schutz der LWL einen Mantel mit spezieller Sandwichkonstruktion auf, der auf seiner Innenseite mit zugfesten Elementen ausgerüstet ist. Die LWL sind dadurch wirksam gegen Querkräfte und Zugbelastungen geschützt, solange der Mantel selbst nicht beschädigt wird. Über das für den Mantel verwendete Material sind der Offenlegungsschrift keine Angaben zu entnehmen. Es ist daher nicht auszuschließen, daß der Mantel bei gröberen mechanischen und thermischen Belastungen zerstört wird und beispielsweise im Brandfall zu Folgeschäden an Metallteilen der Umgebung führt, wie sie beispielsweise vom Polyvinylchlorid her bekannt sind.

Es ist bekannt, für den äußeren Mantel von Leitungen vernetzbare Materialien einzusetzen, wenn an die mechanische und thermische Belastbarkeit der Leitungen höhere Anforderungen gestellt werden. Bekannte Vernetzungsverfahren arbeiten beispielsweise chemisch oder mit energiereichen Strahlen. Bei der chemischen Vernetzung im sogenannten CV-Verfahren werden hohe Drücke und Temperaturen angewendet, denen die Schutzschicht der LWL-Fasern nicht standhält. Bei diesem Verfahren besteht also eine erhebliche Beschädigungsgefahr für den empfindlichen LWL. Das chemische Vernetzungsverfahren mit Silan ist auf Materialien beschränkt, die nicht schon beim Extrudieren des Mantels Wasser abspalten. Halogenfreie Flammschutzmittel setzen bei der Aufpfropfung des Silans und bei der Extrusion schon durch die Friktionswärme soviel Wasser frei, daß eine Anvernetzung des Materials bereits im Extruder erfolgt, so daß eine Weiterverarbeitung zumindest stark erschwert wird. Andere Flammschutzmittel, die für diese Vernetzungsart geeignet sind, setzen im Brandfall Gase frei, die zu Folgeschäden an metallischen Teilen der Umgebung und zur Gefährdung von Lebewesen führen können. Durch energiereiche Strahlen wird die aus Glas bestehende Faser des LWL blind, so daß keine Signale mehr übertragen werden können.

Die bekannten Vernetzungsverfahren sind also für Leitungen, die mindestens einen LWL aufweisen, nicht direkt geeignet.

Das gilt auch für die mit dem Verfahren nach der eingangs erwähnten DE-OS 34 44 500 hergestellte Übertragungsleitung. Die in der Seele dieser Leitung enthaltenen LWL sind von einer Haltewendel umgeben, über welcher eine gemeinsame Umhüllung aus einem schwer entflammbaren Silikonkautschuk angebracht ist. Über der Umhüllung liegt ein Mantel aus vernetztem Polyurethan. Die Umhüllung aus Silikonkautschuk kann allein keinen wirksamen Schutz der umschlossenen LWL gegen energiereiche Strahlen bei der Vernetzung des Polyurethans darstellen. Derartige Schutzmaßnahmen für die LWL sind der Druckschrift nicht zu entnehmen.

Der Erfindung liegt die Aufgabe zugrunde, das eingangs geschilderte Verfahren so weiterzubilden, daß der LWL wirksam insbesondere gegen energiereiche Strahlen geschützt ist und daß im Brandfall keine Folgeschäden in der Umgebung und keine Gefährdung von Lebewesen verursacht werden.

Diese Aufgabe wird entsprechend der Kombination der folgender Merkmale gelöst:
a) um die Seele wird zunächst ein zur Hülle gehörendes Metallband überlappend herumgewickelt,
b) auf das Metallband wird ein ebenfalls zur Hülle gehörendes Geflecht aus metallischen Drähten aufgebracht,
c) über der so fertiggestellten Hülle hoher Dichte wird der Mantel angeordnet und
d) die Anodenspannung der Strahlenquelle wird so bemessen, daß die Eindringtiefe der Strahlen in den Mantel etwa gleich der Wandstärke desselben ist.

Das Verfahren ist mit in der Leitungsherstellung üblichen Vorrichtungen durchführbar. Durch die Vernetzung erhält der Mantel eine große Festigkeit und Beständigkeit gegen mechanische und thermische Beanspruchungen. Da er aus halogenfreiem und schwer entflammbarem Material besteht, ergibt sich auch im Brandfall ein wirksamer Schutz des LWL, ohne daß Folgeschäden in der Umgebung auftreten können und ohne daß Lebewesen gesundheitlich gefährdet werden. Die Strahlenvernetzung erlaubt eine einfache Durchführung des Verfahrens, da der Mantel im kontinuierlichen Durchlauf mit reproduzierbaren Werten vernetzt werden kann. Dabei ist die Hülle aus einem Material hoher Dichte im Zusammenhang mit der vorgegebenen Eindringtiefe der Strahlen von entscheidender Bedeutung. Der gegen energiereiche Strahlen empfindliche LWL wird durch beide Maßnahmen vor den Strahlen geschützt, so daß seine Übertragungseigenschaften durch die Vernetzung nicht verändert werden. Der Schutz wird einerseits durch Vorgabe der Eindringtiefe der Strahlen, die gerade nur den Mantel durchdringen und andererseits durch den Einsatz der zusätzlichen Hülle erreicht. Eventuell über den Mantel hinaus nach innen dringende Strahlen werden durch die Hülle aufgefangen, deren Material hoher Dichte als Schirm für die Strahlen wirkt. Sie können nicht bis zum LWL gelangen.

Das Verfahren nach der Erfindung wird an Hand der Zeichnungen als Ausführungsbeispiel erläutert.

Es zeigen:
Fig. 1 in schematischer Darstellung eine Vorrichtung zur Durchführung des Verfahrens.
Fig. 2 einen Querschnitt durch eine mit dem Verfahren hergestellte Leitung.

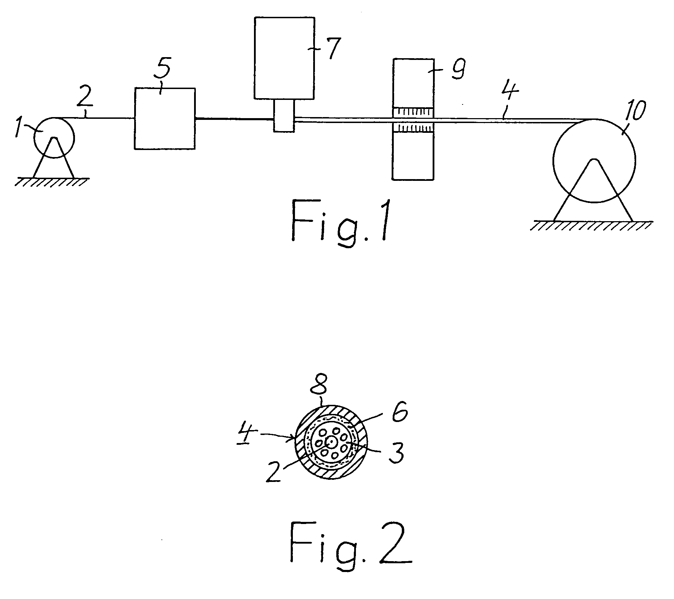

Von einer Spule 1 wird im dargestellten Ausführungsbeispiel ein LWL 2 abgezogen. Der Aufbau des LWL 2 ist beliebig. Der LWL 2 stellt gegebenenfalls zusammen mit weiteren LWL, zugfesten Elementen und auch metallischen Leitern, die in Fig. 2 schematisch angedeutet sind, die Seele 3 einer Übertragungsleitung 4 dar. Um die Seele 3 wird in einer Vorrichtung 5 eine Hülle 6 herumgeformt. Die Hülle 6 besteht aus einem Material hoher Dichte, und zwar aus Metall, wie beispielsweise Kupfer oder Stahl. Zur Erzeugung der Hülle 6 wird ein Metallband überlappend um die Seele 3 herumgewickelt, über welchem ein Geflecht aus Metalldrähten aufgebracht wird.

Über der Hülle 6 wird mit einem Extruder 7 ein Mantel 8 aufgebracht. Die so hergestellte Übertragungsleitung 4 wird anschließend im kontinuierlichen Durchlauf durch eine Strahlenquelle 9 gezogen, in der sie energiereichen Strahlen ausgesetzt wird. In der Strahlenquelle 9 wird der Mantel 8 vernetzt. Die danach fertige Übertragungsleitung 4 kann anschließend auf eine Spule 10 aufgewickelt werden.

Als Materialien für den Mantel 8 können modifizierte Polyolefine verwendet werden, denen Flammschutzmittel zugegeben sind. Es kann auch modifiziertes Polyurethan eingesetzt werden. Als Polyolefin sind beispielsweise Polyethylen-Copolymerisate wie Polyethylen-Vinylacetat-Copolymere geeignet. Als Flammschutzmittel eignen sich beispielsweise Aluminiumhydroxid und Magnesiumhydroxid. Das Material für den Mantel 8 kann beispielsweise aus gleichen Teilen Polyolefin und Flammschutzmittel bestehen. In bevorzugter Ausführungsform werden beispielsweise 100 Teilen eines Polyethylen-Copolymerisats oder eines Polyethylen-Vinylacetat-Copolymeren 120 Teile Aluminiumhydroxid bzw. Magnesiumhydroxid zugegeben. Unter "Modifizierung" ist eine Abmischung des Basispolymeren mit Zuschlagstoffen zu verstehen. Zuschlagstoffe sind beispielsweise Alterungsschutzmittel, Vernetzungshilfsmittel oder auch Flammschutzmittel, alle zur Optimierung der Eigenschaften der zu verwendenden Materialien.

Das halogenfreie und schwer entflammbare Material für den Mantel 8 soll beispielsweise eine Dichte von 1,45 g/cm³ haben. Bei einer Wandstärke von 1 mm für den Mantel 8 wird die Anodenspannung der Strahlungsquelle 9 auf 0,64 MeV eingestellt. Die Strahlen haben bei der angegebenen Dichte des Mantelmaterials eine Eindringtiefe von etwa 1 mm, so daß der Mantel 8 rundum vernetzt wird, wenn die Übertragungsleitung 4 während der Bestrahlung ganz um ihre Achse gedreht wird. Über den Mantel 8 hinaus nach innen vordringende Strahlen werden durch die Hülle 6 aufgefangen.

## Patentansprüche

1. Verfahren zur Herstellung einer Übertragungsleitung für optische Signale mit eine Seele in der mindestens ein Lichtwellenleiter angeordnet ist, wobei um die Seele eine Hülle aus einem halogenfreien und schwer entflammbaren Werkstoff herumgeformt wird, wobei über der Hülle ein aus einem halogenfreien, schwer entflammbaren und durch energiereiche Strahlen vernetzbaren Material bestehender Mantel aufgebracht wird und wobei der Mantel abschließend in einer energiereiche Strahlen abgebenden Strahlenquelle vernetzt wird, gekennzeichnet durch die Kombination folgender Merkmale:
a) um die Seele (3) wird zunächst ein zur Hülle (6) gehörendes Metallband überlappend herumgewickelt,
b) auf das Metallband wird ein ebenfalls zur Hülle (6) gehörendes Geflecht aus metallischen Drähten aufgebacht,
c) über der so fertiggestellten Hülle (6) hoher Dichte wird der Mantel (8) angeordnet und
d) die Anodenspannung der Strahlenquelle (9) wird so bemessen, daß die Eindringtiefe der Strahlen in den Mantel (8) etwa gleich der Wandstärke desselben ist.

## Claims

1. Method for producing a transmission line for optical signals having a core in which at least one optical fibre is arranged, a buffer tube made from a halogen-free material that is not easily flammable being formed around the core, a halogen-free cladding that is not easily flammable and consists of a material which can be crosslinked by high-energy rays being applied over the buffer tube, and the cladding subsequently being crosslinked in a radiation source emitting high-energy rays, characterised by the combination of the following features:
a) firstly, a metal strip belonging to the buffer tube (6) is wound around the core (3) in an overlapping fashion,
b) a network made from metallic wires and likewise belonging to the buffer tube (6) is applied to the metal strip,
c) the cladding (8) is arranged over the buffer tube (6) of high density thus produced, and
d) the anode voltage of the radiation source (9) is dimensioned such that the penetration depth of the rays into the cladding (8) is approximately equal to the wall thickness thereof.

## Revendications

1. Procédé de fabrication d'une ligne de transmission pour signaux optiques avec une âme dans laquelle est disposé au moins un guide d'ondes lumineuses, procédé dans lequel, autour de l'âme, on forme une gaine constituée d'un matériau exempt d'halogène et difficilement inflammable, dans lequel, au-dessus de la gaine, on rapporte une enveloppe constituée d'un matériau exempt d'halogène, difficilement inflammable et réticulable par des rayons énergétiques et dans lequel on réticule finalement l'enveloppe dans une source de rayonnement émettant des rayons énergétiques, procédé caractérisé par la combinaison des attributs suivants:
a) autour de l'âme (3), on enroule tout d'abord, à recouvrement, un ruban métallique faisant partie de la gaine (6),
b) sur le ruban métallique on rapporte un treillis de fils métalliques, faisant également partie de la gaine (6),
c) au-dessus de la gaine (6) de densité élevée, ainsi achevée, on dispose l'enveloppe (8) et
d) on détermine la tension d'anode de la source de rayonnement (9) de façon que la profondeur de pénétration des rayons dans l'enveloppe (8) soit à peu près égale à son épaisseur de paroi.
